Europäisches Patentamt

European Patent Office

Office européen des brevets

(11) Veröffentlichungsnummer: **0 303 127**
B1

# EUROPÄISCHE PATENTSCHRIFT

(45) Veröffentlichungstag der Patentschrift:
25.04.90

(51) Int. Cl.⁴: **F16B 37/00**, B43K 21/08

(21) Anmeldenummer: 88112397.0

(22) Anmeldetag: 30.07.88

(54) **Einrichtung mit einem Schraubelement und einem Mutterelement, und Verwendung der Einrichtung.**

(30) Priorität: 04.08.87 DE 3725792

(43) Veröffentlichungstag der Anmeldung:
15.02.89 Patentblatt 89/7

(45) Bekanntmachung des Hinweises auf die Patenterteilung:
25.04.90 Patentblatt 90/17

(84) Benannte Vertragsstaaten:
DE FR GB IT

(56) Entgegenhaltungen:
AT-B- 23 557
DE-A- 2 723 058
US-A- 3 878 757
US-A- 4 048 897

(73) Patentinhaber: Schwan-STABILO Schwanhäusser GmbH
& Co., Maxfeldstrasse 3, D-8500 Nürnberg(DE)

(72) Erfinder: Möck, Gerhard, Dipl.-Ing. (FH), Waldstrasse 4,
D-8551 Kirchehrenbach(DE)

(74) Vertreter: LOUIS, PÖHLAU, LOHRENTZ & SEGETH,
Kesslerplatz 1 Postfach 3055, D-8500 Nürnberg-1(DE)

## Beschreibung

Die Erfindung betrifft eine Einrichtung mit einem ein Schraubgewinde aufweisendes Schraubelement und einem spritzgegossenen Mutterelement, das in einem zentralen Loch ein dem Außengewinde des Schraubelements in Steigung und Ganghöhe entsprechendes Innengewinde aufweist, das aus mindestens einem Gewindeabschnitt besteht, der sich in Umfangsrichtung des Loches höchstens um den halben Umfang des Loches erstreckt, wobei im Mutterelement auf der dem Gewindeabschnitt diametral gegenüberliegenden Seite eine Ausnehmung ohne Innengewinde vorhanden ist, deren Querschnittsabmessungen der axialen Länge des Gewindeabschnittes und mindestens dem Durchmesser des Innengewindes entspricht, und eine Verwendung dieser Einrichtung.

Eine derartige Einrichtung ist aus der DE-A 15 00 909 bekannt. Bei dieser Einrichtung erstreckt sich das Innengewinde in axialer Richtung über die gesamte Länge des im Mutterelement vorhandenen Loches. Die dem Innengewindeabschnitt diametral gegenüberliegende gewindelose Ausnehmung erstreckt sich dort in einer zum Innengewinde axial parallel verlaufenden Richtung. Zur Herstellung einer derartigen Einrichtung ist eine Kernvorrichtung erforderlich, die zwei Kernteile aufweist. Das eine Kernteil ist zur Ausbildung des Innengewindeabschnittes mit einem Gewindeteil und das zweite Kernteil ist ohne Gewindeabschnitt ausgebildet. Die beiden Kernteile sind in Bezug zueinander in axialer Richtung verschiebbar, um nach der Herstellung der Einrichtung in einem Kunststoff-Spritzgieß- oder -Spritzpreßvorgang zuerst den gewindelosen Kernteil in axialer Richtung aus dem Loch herauszubewegen und anschließend den ersten Kernteil zuerst in radialer Richtung und nachfolgend in axialer Richtung zu verschieben.

Durch die radiale Bewegung des ersten Kernteiles wird das erste Kernteil vom geformten Innengewindeabschnitt wegbewegt, d.h. außer Eingriff gebracht, so daß das zweite Kernteil anschließend in axialer Richtung aus dem den Innengewindeabschnitt aufweisenden Loch herausbewegt werden kann. Dort sind also nicht nur zwei Kernteile erforderlich, sondern es ist außerdem erforderlich, daß diese beiden Kernteile in der richtigen Aufeinanderfolge eine Bewegung (zweites Kernteil) bzw. zwei Verschiebebewegungen (erstes Kernteil) ausführen müssen, um von der Einrichtung entfernt werden zu können.

Die US-A 10 86 687 beschreibt eine Schraubenmutter aus einem streifenförmigen Blechmaterial. Dabei wird das streifenförmige Blechmaterial zuerst an einem mittleren Flächenabschnitt mit einem Loch versehen. Anschließend wird das Blechmaterial auf beiden Seiten seitlich des Loches zusammengefaltet und zu einer Hülse aufgebogen. Die Hülse besteht also aus zwei Blechabschnitten. Mindestens einer der beiden Blechabschnitte wird mit einem Gewindeabschnitt ausgebildet. Das kann beispielsweise durch einen Stempelvorgang vor dem Zusammenfalten erfolgen.

Der Erfindung liegt die Aufgabe zugrunde, eine Einrichtung der eingangs genannten Art zu schaffen, bei der es mit vergleichsweise einfachen Mitteln möglich ist, das Mutterelement aus spritzgegossenem Material mit einem Innengewinde auszubilden, ohne daß darunter die Schraubverbindung zwischen dem Schraubelement und der Schraubmutter leidet, und eine bevorzugte Verwendung einer solchen Einrichtung anzugeben.

Diese Aufgabe wird erfindungsgemäß dadurch gelöst, daß der Gewindeabschnitt des Innengewindes sich in axialer Richtung des Loches nur entlang eines Teilabschnittes des Lochs erstreckt, und daß die Ausnehmung auf der dem Gewindeabschnitt diametral gegenüberliegenden Seite die Wandung des Mutterelementes durchdringt.

Dadurch, daß der Innengewindeabschnitt sich nur entlang eines Teiles der axialen Ausdehnung des Loches erstreckt, verbleibt auf beiden Seiten neben der das Mutterelement durchdringenden Ausnehmung Material des Mutterelementes, auf dem das Schraubelement aufliegen kann. Der Gewindeabschnitt kann mittels eines im Spritzpreß-Formwerkzeug vorgesehenen Schiebers ausgebildet werden, der auf seiner Vorderseite zu diesem Zweck halbzylindrisch ausgebildet und auf seiner halbzylindrischen Stirnfläche mit dem entsprechenden Gewindeabschnitt ausgebildet ist. Der das Loch im Mutterelement schneidende Schieber wird nach dem Spritzgieß-Vorgang aus dem Formwerkzeug entfernt, wobei im Mutterelement auf der dem Gewindeabschnitt gegenüberliegenden Seite die dem Querschnitt des Schiebers entsprechende Ausnehmung ausgebildet wird. Durch die halbseitige Ausbildung des Gewindeabschnittes ergibt sich jedoch für das Schraubelement mit einem diesem Innengewindeabschnitt entsprechenden Außengewinde ein ausreichender Gewindeeingriffsabschnitt, so daß eine Drehung des Schraubelementes einer axialen Vorschubbewegung desselben im Mutterelement entspricht. Durch den Schieber ist es möglich, im Mutterelement aus spritzgegossenem Material ein Innengewinde mit beliebig kleiner Gewindesteigung auszubilden, so daß ein Schraubelement sehr feinfühlig in das Mutterelement eingeschraubt werden kann. Ein Verkanten des Schraubelementes im Mutterelement wird auch dadurch verhindert, daß das Schraubelement auch entlang des neben der durch den Schieber bedingten Ausnehmung vorhandenen Flächenabschnittes des Mutterelementes anliegt. Es ist also zweckmäßig, die durch den Schieber bedingte Ausnehmung allseitig durch das spritzgegossene Material des Mutterelementes zu begrenzen.

Das Innengewinde kann durch mindestens zwei im zentralen Loch des Mutterelementes vorgesehene Gewindeabschnitte gebildet sein, die in axialer Richtung des zentralen Loches nebeneinander angeordnet sind. Vorzugsweise weisen die benachbarten Gewindeabschnitte voneinander in axialer Richtung des zentralen Loches einen Abstand auf. Eine derartige Ausbildung ist immer dann vorteilhaft, wenn das Mutterelement eine ausreichende axiale Längenausdehnung aufweist.

Benachbarte Gewindeabschnitte können sich diametral gegenüberliegen. Dabei versteht es sich, daß die benachbarten Gewindeabschnitte mit derartig orientierten Gewinden ausgebildet sind, daß ein Schraubelement in das Mutterelement eingeschraubt werden kann. Bei einer Ausführungsform der Einrichtung, wie sie zuletzt beschrieben worden ist, liegen sich selbstverständlich auch die durch die Schieber bedingten, den Gewindeabschnitten gegenüberliegenden Ausnehmungen diametral gegenüber.

Als zweckmäßig hat es sich erwiesen, daß das zentrale Loch im Mutterelement einen kreisrunden Querschnitt aufweist, dessen Durchmesser dem Außendurchmesser des Schraubgewindes des Schraubelementes entspricht. Es ist jedoch auch möglich, das zentrale Loch eckig, oval oder beliebig anders auszubilden, von Wichtigkeit ist dabei nur, daß das Schraubelement nicht nur an den mindestens einen Gewindeabschnitt, sondern auch an mindestens einem weiteren, nicht mit einem Innengewindeabschnitt ausgebildeten Flächenabschnitt am Loch anliegt.

Die oben beschriebene Einrichtung wurde insbesondere zur Verwendung in einem Auftragsgerät mit einer das Schraubelement bildenden Gewindespindel und mit einer das Mutterelement bildenden Gewindehülse entwickelt, wobei die Gewindespindel in einem Gehäuseschaft des Auftragsgerätes gegen Verdrehung gesichert und axial verschiebbar angeordnet ist, und die Gewindehülse in einem Gehäusevorderteil befestigt ist, das am Gehäuseschaft drehbar angeordnet ist. Bei einem derartigen Auftragsgerät kann es sich um ein Schreib- oder ein Malgerät, um einen Applikator für kosmetische Anwendungen oder dgl. handeln.

Weitere Einzelheiten, Merkmale und Vorteile ergeben sich aus der nachfolgenden Beschreibung von in der Zeichnung dargestellten Ausführungsbeispielen der erfindungsgemäßen Einrichtung mit einem Schraubelement und einem Mutterelement. Es zeigt:

Figur 1 einen Längsschnitt durch ein abschnittweise dargestelltes Mutterelement,

Figur 2 eine Seitenansicht eines in das Mutterelement gemäß Figur 1 einschraubbaren Schraubelementes,

Figur 3 einen Schnitt durch das Mutterelement gemäß Figur 1 entlang der Schnittlinie III-III,

Figur 4 einen Längsschnitt durch eine zweite Ausführungsform des Mutterelementes mit zwei Gewindeabschnitten,

Figur 5 eine Seitenansicht eines abschnittweise dargestellten Schraubelementes zum Einschrauben in das Mutterelement gemäß Figur 4,

Figur 6 einen Schnitt durch das Mutterelement gemäß Figur 4 entlang der Schnittlinie VI-VI, und

Figur 7 einen Schnitt durch das Mutterelement gemäß Figur 4 entlang der Schnittlinie VII-VII.

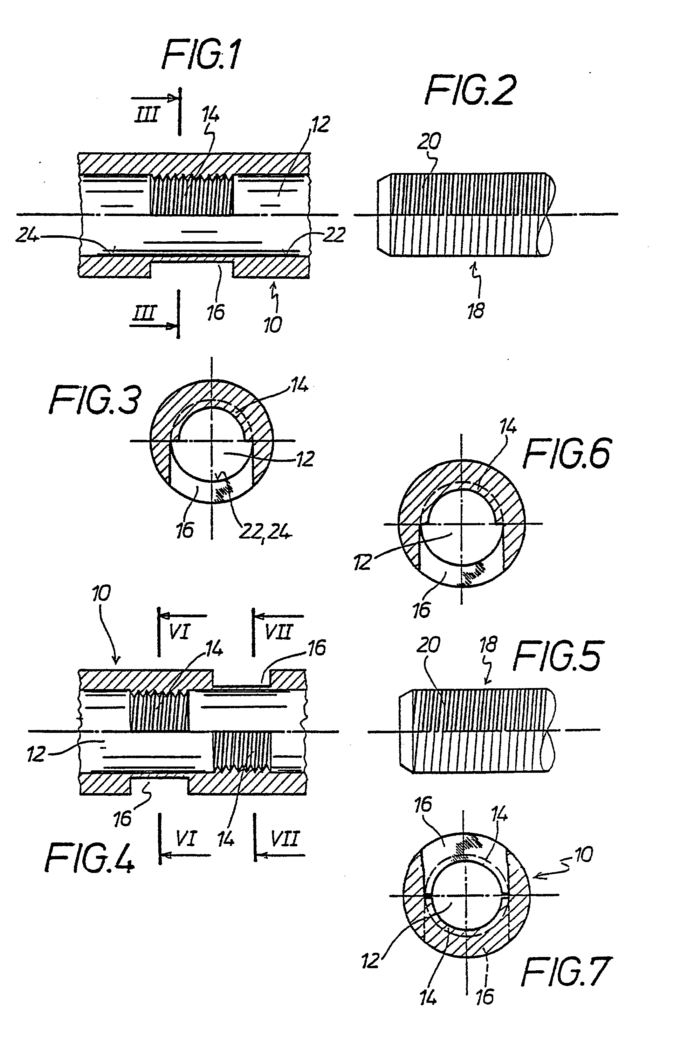

Figur 1 zeigt ein Mutterelement 10 mit einem zentralen Loch 12, das mit einem Innengewinde ausgebildet ist. Das Innengewinde des Mutterelementes 10 besteht aus einem Gewindeabschnitt 14, der eine bestimmte axiale Länge aufweist. Wie aus Figur 3 ersichtlich ist, erstreckt sich der Gewindeabschnitt 14 in Umfangsrichtung des zentralen Loches 12 nur über den halben Umfang des Loches 12. Auf der dem Gewindeabschnitt 14 diametral gegenüberliegenden Seite weist das Mutterelement 10 eine Ausnehmung 16 auf, die das zentrale Loch 12 schneidet. Die Ausnehmung 16 und insbesondere der Gewindeabschnitt 14 werden durch einen im Spritzgiess-Formwerkzeug zur Herstellung des Mutterelementes 10 vorhandenen Schieber ausgebildet. Aus diesem Grunde weist die Ausnehmung 16 Abmessungen auf, die in axialer Richtung des Mutterelementes 10 mindestens der axialen Abmessung des Gewindeabschnittes 14 und in radialer Richtung des Mutterelementes 10 mindestens dem Durchmesser des kreisrunden Loches 12 entsprechen.

In das zentrale Loch 12 des Mutterelementes 10 kann ein Schraubelement 18 eingeschraubt werden, das in Figur 2 abschnittweise dargestellt ist, und das ein Aussengewinde 20 aufweist, dessen Gewindesteigung und Ganghöhe der Gewindesteigung und Ganghöhe des Gewindeabschnittes 14 des Mutterelementes 10 entspricht.

Durch diese Ausbildung des Mutterelementes 10 mit dem Gewindeabschnitt 14, der mittels eines (nicht dargestellten) Schiebers während des Spritzgiessvorgangs zur Herstellung des Mutterelementes 10 ausgeformt wird, ist es möglich, das spritzgegossene Mutterelement 10 mit einem Innengewinde auszubilden, das eine beliebig kleine Gewindesteigung aufweist, so dass das entsprechende Schraubelement 18 sehr feinfühlig in das Mutterelement 10 ein- bzw. durch das Mutterelement 10 durchgeschraubt werden kann.

Wie aus Figur 1 ersichtlich ist, ist der Gewindeabschnitt 14 im mittleren Bereich des zentralen Loches 12 des Mutterelementes 10 ausgebildet. Auf diese Weise liegt das Schraubelement 18 im eingeschraubten Zustand sowohl an einem Flächenabschnitt 22 als auch an einem Flächenabschnitt 24 an, die in axialer Richtung seitlich neben dem Gewindeabschnitt 14 diametral gegenüberliegend vorgesehen sind.

Figur 4 zeigt eine zweite Ausführungsform des Mutterelementes 10, das in seinem zentralen Loch 12 mit zwei Gewindeabschnitten 14 ausgebildet ist. Die beiden Gewindeabschnitte 14 liegen sich diametral gegenüber und weisen voneinander in axialer Richtung des Mutterelementes 10 einen Abstand auf. Jedem Gewindeabschnitt 14 liegt diametral eine Ausnehmung 16 gegenüber, die durch den zur Herstellung des entsprechenden Gewindeabschnittes 14 erforderlichen (nicht dargestellten) Schieber gebildet wird.

Figur 5 zeigt ein abschnittweise dargestelltes Schraubelement 18 mit einem Aussengewinde 20, das den beiden Gewindeabschnitten 14 im Mutterelement 10 nach Gewindesteigung und Gewindehöhe entspricht.

Wie aus Figur 6 ersichtlich ist, erstreckt sich der Gewindeabschnitt 14 nur entlang des halben Umfanges des kreisrunden zentralen Loches 12. Die Ausnehmung 16 liegt dem Gewindeabschnitt 14 diametral gegenüber.

Aus Figur 7 ist ersichtlich, dass die beiden halbseitigen Gewindeabschnitte 14 und die zu den jeweiligen Gewindeabschnitten 14 zugehörigen Ausnehmungen 16 jeweils diametral gegenüberliegend vorgesehen sind. Selbstverständlich wäre es auch möglich, die Gewindeabschnitte 14 nicht diametral gegenüberliegend, sondern in Umfangsrichtung des zentralen Loches 12 beliebig anders verteilt anzuordnen. Auf jeden Fall ergibt sich ein Mutterelement 10 mit einem durch den mindestens einen Gewindeabschnitt 14 gebildeten Innengewinde, in das ein Schraubelement 18 ein- bzw. durchschraubbar ist.

## Patentansprüche

1. Einrichtung mit einem ein Schraubgewinde (20) aufweisenden Schraubelement (18) und einem spritzgegossenen Mutterelement (10), das in einem zentralen Loch (12) ein dem Außengewinde (20) des Schraubelementes (18) in Steigung und Ganghöhe entsprechendes Innengewinde aufweist, das aus mindestens einem Gewindeabschnitt (14) besteht, der sich in Umfangsrichtung des Loches (12) erstreckt, wobei im Mutterelement (10) auf der dem Gewindeabschnitt (14) diametral gegenüberliegenden Seite eine Ausnehmung (16) ohne Innengewinde vorhanden ist, deren Querschnittsabmessungen der axialen Länge des Gewindeabschnittes (14) und mindestens dem Durchmesser des Innengewindes entspricht, **dadurch gekennzeichnet,** daß der Gewindeabschnitt (14) des Innengewindes sich in axialer Richtung des Loches (12) nur entlang eines Teilabschnittes des Loches (12) erstreckt, und daß die Ausnehmung (16) auf der dem Gewindeabschnitt diametral gegenüberliegenden Seite die Wandung des Mutterelementes (10) durchdringt.

2. Einrichtung nach Anspruch 1, dadurch gekennzeichnet, daß das Innengewinde (14) durch mindestens zwei im zentralen Loch (12) vorgesehene Gewindeabschnitte (14) gebildet ist, die in axialer Richtung des zentralen Loches (12) nebeneinander angeordnet sind.

3. Einrichtung nach Anspruch 2, dadurch gekennzeichnet, daß die benachbarten Gewindeabschnitte (14) voneinander in axialer Richtung des zentralen Loches (12) einen Abstand aufweisen.

4. Einrichtung nach Anspruch 2 oder 3, dadurch gekennzeichnet, daß die benachbarten Gewindeabschnitte (14) einander diametral gegenüberliegen.

5. Einrichtung nach einem der vorhergehenden Ansprüche, dadurch gekennzeichnet, daß das zentrale Loch einen kreisrunden Querschnitt aufweist, dessen Durchmesser dem Außendurchmesser des Schraubgewindes (20) des Schraubelementes (18) entspricht.

6. Verwendung einer Einrichtung nach einem der vorhergehenden Ansprüche in einem Auftragsgerät mit einer das Schraubelement (18) bildenden Gewindespindel und mit einer das Mutterelement (10) bildenden Gewindehülse, wobei die Gewindespindel in einem Gehäuseschaft des Auftragsgerätes gegen Verdrehung gesichert und axial verschiebbar angeordnet ist, und die Gewindehülse in einem Gehäusevorderteil des Auftragsgerätes befestigt ist, das am Gehäuseschaft drehbar angeordnet ist.

## Claims

1. A device with a screw element (18) having a screw thread (20) and an injection moulded nut element (10) which has, in a central hole (12), an internal thread corresponding to the external thread (20) of the screw element (18) in its pitch and lead and consisting of at least one thread section (14) extending in the peripheral direction of the hole (12), there being provided in the nut element (10) on the diametrically opposite side to the thread section (14), a cut out (16) without an internal thread whose cross-sectional dimensions correspond to the axial length of the thread section (14) and at least to the diameter of the internal thread, characterized in that the thread section (14) of the internal thread extends in the axial direction of the hole (12) only along a part section of the hole (12), and in that the cut out (16) passes through the wall of the nut element (10) on the diametrically opposite side to the thread section.

2. A device according to claim 1, characterized in that the internal thread (14) is formed by at least two thread sections (14) provided in the central hole (12) which are arranged next to each other in the axial direction of the central hole (12).

3. A device according to claim 2, characterized in that the neighbouring thread sections (14) have a gap between them in the axial direction of the central hole (12).

4. A device according to claim 2 or 3, characterized in that the neighbouring thread sections (14) are diametrically opposed to each other.

5. A device according to one of the preceding claims, characterized in that the central hole has a circular cross-section, whose diameter corresponds to the external diameter of the screw thread (20) of the screw element (18).

6. Use of a device according to one of the preceding claims in an applicator with a threaded spindle forming the screw element (18) and with a threaded sleeve forming the nut element (10), the threaded spindle being arranged in a casing barrel of the applicator secured against rotation and axially displaceable and the threaded sleeve being fixed in a front casing part of the applicator, which part is rotatably arranged on the casing barrel.

## Revendications

1. Dispositif se composant d'un élément vis (18) présentant un filetage (20) et d'un élément écrou moulé par injection (10) présentant, dans une cavité centrale, un filetage intérieur correspondant en pas et en profondeur au filetage extérieur (20) de l'élément vis (18), et se composant d'au moins une section filetée (14) s'étendant sur le pourtour de la cavité (12), de telle sorte que, dans l'élément écrou (10), sur le côté diamétralement opposé à la section filetée (14), est pratiqué un évidement (16) sans filetage intérieur, et dont les dimensions transversales correspondent à la longueur axiale de la section filetée (14) et au moins au diamètre du filetage intérieur, caractérisé en ce que la section filetée (14) du filetage intérieur ne s'étend dans la direction axiale de la cavité (12) que le long d'une section partielle de la cavité (12), et l'évidement (16) pénètre la paroi de l'élément écrou (10) sur le côté diamétralement opposé à la section filetée.

2. Dispositif selon la revendication 1, caractérisé en ce que le filetage intérieur (14) est formé d'au moins deux sections filetées (14) dans la cavité centrale (12), disposées côte à côte axialement dans la cavité centrale (12).

3. Dispositif selon la revendication 2, caractérisé en ce que les sections filetées voisines (14) sont écartées l'une de l'autre d'une certaine distance axiale dans la cavité centrale.

4. Dispositif selon l'une des revendications 2 et 3, caractérisé en ce que les sections filetées voisines (14) sont diamétralement opposées l'une à l'autre.

5. Dispositif selon l'une quelconque des revendications 1 à 4, caractérisé en ce que la cavité centrale présente une section circulaire dont le diamètre correspond au diamètre extérieur du filetage (20) de l'élément vis (18).

6. Application d'un dispositif selon l'une quelconque des revendications 1 à 5, dans un appareil de commande comportant une broche filetée constituant l'élément vis (18) et une douille filetée constituant l'élément écrou (10) de telle sorte que la broche filetée soit disposée dans un arbre du carter de l'appareil en étant immobilisée contre la rotation, et mobile axialement, et la douille filetée dans une portion avant du carter montée rotative sur l'arbre du carter.

FIG.1

FIG.2

FIG.3

FIG.6

FIG.4

FIG.5

FIG.7